# EUROPEAN PATENT APPLICATION

(11) **EP 2 495 829 A1**
(43) Date of publication of application: **05.09.2012**
(21) Application number: 12000726.5
(22) Date of filing: 03.02.2012
(51) Int. Cl.: H01R 43/24, H01R 13/405, H01R 4/30, H01R 9/24

(54) **Terminal block and method of molding it**

(30) Priority: 03.03.2011 JP 2011046477
(71) Applicant: Sumitomo Wiring Systems, Ltd., Yokkaichi-city, Mie 510-8503 (JP)
(72) Inventor: Akuta, Daisuke, Yokkaichi-City Mie 510-8503 (JP)
(74) Representative: Müller-Boré & Partner Patentanwälte

(57) **Abstract**

An object of the present invention is to suppress the peel-off of secondary molding resin by preventing inclination of an insulation wall in a partition wall and make it easy confirmable that the insulation wall is not inclined in the partition wall.

A terminal block 10 fastens conductors by placing the conductors one above another and fastening bolts and includes a plurality of nuts 30 on which the conductors are to be placed and partition walls 50 partitioning between adjacent nuts 30. Each partition wall 50 includes an insulation wall 24 provided in an insulation plate 20 arranged below the nuts 30 and a molded resin portion 60 covering the upper surface of the insulation wall 24 and the side surface of the insulation wall 24. Exposed portions 27A, which are exposed upper end parts of a projecting portion 27 provided on the insulation wall 24, are provided on the upper end surface of the molded resin portion 60.

## Description

The present invention relates to a terminal block and to a method of molding a terminal block.

A terminal block for electrically connecting conductors such as busbars extending from electric devices such as a motor and an inverter is conventionally known from Japanese Unexamined Patent Publication No. 2008-98007. This terminal block is so constructed that conductors provided in electric devices are placed one over another on a terminal block body formed by insert molding to include a plurality of nuts arranged side by side in the terminal block, and electrically connected by being fastened together by fastening bolts and the nuts. Further, the terminal block of this type includes partition walls made of synthetic resin and extending upward between the respective nuts to be located above fastening surfaces of the nuts. These partition walls ensure electrical insulation between the respective nuts and electrical insulation between the conductors placed on the fastening surfaces of the respective nuts.

However, if it is tried to shape the above terminal block by one molding, there is a possibility of reducing insulation between the respective nuts due to production of voids in the partition walls. Thus, an attempt to shape the above terminal block by two separate moldings is being studied. Specifically, it is being studied to shape thin insulation walls in such a manner as not to produce voids and the like by primary molding and perform secondary molding with the insulation walls arranged between the respective nuts to shape the partition walls having the insulation walls inside. According to such a molding method, the respective nuts can be reliably insulated from each other by the insulation walls, i.e. only by primary molding resin regardless of whether or not voids are produced in secondary molding resin, wherefore electrical insulation between the respective nuts can be ensured when primary molding is completed.

However, when secondary molding is performed with the insulation walls arranged between the respective nuts, the insulation walls may be inclined due to an injection pressure of the secondary molding resin and the partition walls may be shaped with the insulation walls inclined. If the partition walls are shaped with the insulation walls inclined, the thickness of the secondary molding resin may become uneven at the opposite sides of the insulation walls or the flow of the secondary molding resin may be hindered by the inclined insulation walls and the secondary molding resin for covering the insulation walls may become insufficient. Then, the secondary molding resin may peel off in a part where the thickness of the secondary molding resin is small.

The present invention was completed in view of the above situation and an object thereof is to improve durability of a terminal block.

This object is solved according to the invention by the features of the independent claims. Preferred embodiments of the invention are subject of the dependent claims.

According to one aspect of the invention, there is provided a terminal block for fastening conductors by placing the conductors one above another and fastening bolts, comprising a plurality of nuts on which the conductors are to be placed and a partition wall partitioning between the nuts adjacent to each other, wherein the partition wall extends in a direction crossing an arrangement direction of the nuts and includes an insulation wall made of primary molding resin, located at least in a range in a vertical direction from the lower surfaces of the nuts to the upper surfaces of the bolts to be fastened to the nuts and insulating between the adjacent nuts, and a secondary molding portion made of secondary molding resin, filling up clearances between the insulation wall and the nuts and at least partly covering the side surface of the insulation wall.

According to a particular embodiment, at least one exposed portion, which is an exposed part of a projecting portion projecting upward from the upper end of the insulation wall, is provided on the upper surface of the secondary molding portion.

Particularly, the secondary molding portion covers the side surface of the insulation wall over the substantially entire circumference.

Accordingly, the peel-off of secondary molding resin is suppressed by preventing an insulation wall in a partition wall from being inclined and make it easily confirmable that the insulation wall is not inclined in the partition wall.

According to a further particular embodiment, there is provided a terminal block for fastening conductors by placing the conductors one above another and fastening bolts, comprising a plurality of nuts on which the conductors are to be placed and a partition wall partitioning between the nuts adjacent to each other, wherein the partition wall extends in a direction crossing an arrangement direction of the nuts and includes an insulation wall made of primary molding resin, located at least in a range in a vertical direction from the lower surfaces of the nuts to the upper surfaces of the bolts to be fastened to the nuts and insulating between the adjacent nuts, and a secondary molding portion made of secondary molding resin, filling up clearances between the insulation wall and the nuts and covering the side surface of the insulation wall over the entire circumference; and an exposed portion, which is an exposed part of a projecting portion projecting upward from the upper end of the insulation wall, is provided on the upper surface of the secondary molding portion.

According to the thus constructed terminal block, since the secondary molding portion is formed with the adjacent nuts insulated by the insulation wall, electrical insulation between the adjacent nuts can be reliably ensured when primary molding is completed. Further, since the secondary molding portion is formed by fixing and covering the projecting portion provided on the upper end of the insulation wall by a secondary molding mold, it is possible to prevent inclination of the insulation wall by an injection pressure of the secondary molding resin and evenly form the secondary molding portion around the insulation wall. This can suppress the peel-off of the secondary molding portion as compared with the case where the secondary molding portion is formed with the insulation wall inclined in the partition wall. Further, since the exposed portion is exposed on the upper surface of the secondary molding portion, it can be guaranteed that the insulation wall is not inclined in the partition wall. Furthermore, since the partition wall is formed in two processes, i.e. by primary molding and secondary processing, production of voids in the partition wall can be suppressed as compared with the case where the partition wall is formed only by one molding.

The present invention is preferably embodied to have the following constructions.

A plurality of exposed portions may be arranged in the direction crossing the arrangement direction of the nuts on the upper surface of the secondary molding portion.

If the exposed portion has a long straight part, resin warping and resin peel-off are likely to occur at an interface between the straight part and the secondary molding portion covering the straight part when heating and cooling are repeated such as in a heat cycle test. In this respect, since the plurality of exposed portions are formed according to the above construction, each exposed portion is not formed with a long straight part and the occurrence of resin warping and resin peel-off can be suppressed at the interface between the exposed portions and the secondary molding portion.

A (particularly substantially fillet-like) inclined portion at least partly covering a base end portion of the exposed portion (particularly substantially over the entire circumference) may be formed on the upper surface of the secondary molding portion.

If no inclined portion is formed, action of an external force on the exposed portion causes the exposed portion to be deformed away from the secondary molding portion at an external force acting side and the resin may peel off at the interface between the exposed portion and the secondary molding portion. In this respect, according to the above construction, the fillet-like inclined portion is likely to follow deformation of the exposed portion when an external force acts on the exposed portion. Thus, the occurrence of resin peel-off at the interface between the base end portion of the exposed portion and the inclined portion can be suppressed.

The inclined portion may be configured such as to follow deformation of the exposed portion in order to be held in close contact with the base end portion of the exposed portion when an external force acts on the exposed portion.

The terminal block may further comprise a heat sink to be arranged on one side of the nut(s) substantially opposite to another side where the conductor(s) is/are to be placed and an insulation plate to be sandwiched between the nut(s) and the heat sink from opposite sides.

The secondary molding portion may at least partly cover the nut(s), the insulation plate and the heat sink.

The secondary molding portion may include:
an upper covering portion to be held in close contact with the nut(s) and/or upper end portion(s) of surrounding wall(s) of the insulation plate,
a lower covering portion to be held in close contact with a sink body of the heat sink, and/or
a side wall portion to be held in close contact with the outer side surface(s) of the insulation plate and/or the sink body of the heat sink.

The upper covering portion may be so formed as to fill up the clearances between the inner peripheral surfaces of the surrounding wall of the nut accommodating recess and the side surface of the respective nut.

The upper covering portion may comprise one or more surrounding wall covering portions at least partly covering the upper surface(s) of the surrounding wall(s).

Nut accommodating recesses may be provided which are substantially arranged side by side and into which the nuts can be at least partly accommodated, wherein a creepage distance capable of providing electrical insulation between the adjacent nut accommodating recesses particularly is ensured only by the insulation wall(s).

According to another aspect of the invention, there is provided a method of molding or forming or producing a terminal block, in particular according to the previous aspect of the invention or a particular embodiment thereof, for fastening conductors by placing the conductors one above another and fastening bolts, the method comprising the following steps:
assembling one or more nuts, an insulation plate having an insulation plate made by primary molding resin and a heat sink with each other and setting it in a first mold,
relatively displacing the first mold with respect to a second mold so as to close the first and second molds, wherein the first mold supports the heat sink in a positioned state and wherein the second mold includes one or more supporting portions for supporting projecting portions of the insulation plate,
injecting secondary molding resin into the first and second molds to at least partly shape a secondary molding portion filling up clearances between the insulation wall and the nuts and at least partly covering the side surface of the insulation wall, and
opening the first and second molds relatively to each other when the secondary molding resin substantially is cured.

The molding method may further comprise forming at least one exposed portion, which is an exposed part of a projecting portion projecting upward from the upper end of the insulation wall, on the upper surface of the secondary molding portion.

According to the above, it is possible to suppress the peel-off of secondary molding resin by preventing an insulation wall in a partition wall from being inclined and make it easily confirmable that the insulation wall is not inclined in the partition.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block,
FIG. 2 is a plan view of the terminal block,
FIG. 3 is a rear view of the terminal block,
FIG. 4 is a bottom view of the terminal block,
FIG. 5 is a section along V-V of FIG. 2,
FIG. 6 is a section along VI-VI of FIG. 2,
FIG. 7 is a section along VII-VII of FIG. 2,
FIG. 8 is a plan view of a nut,
FIG. 9 is a plan view of an insulation plate,
FIG. 10 is a rear view of the insulation plate,
FIG. 11 is a plan view of a heat sink,
FIG. 12 is a side view showing a state where nuts, the insulation plates and the heat sink are assembled,
FIG. 13 is a section showing a state where the nuts, the insulation plate and the heat sink are set in a secondary molding mold,
FIG. 14 is a lateral section showing a state after molding resin is injected into the secondary molding mold,
FIG. 15 is an enlarged section showing a state where an exposed portion is supported by a supporting portion in an upper mold of FIG. 14, and
FIG. 16 is a longitudinal section showing a state after the molding resin is injected into the secondary molding mold.

### <Embodiment>

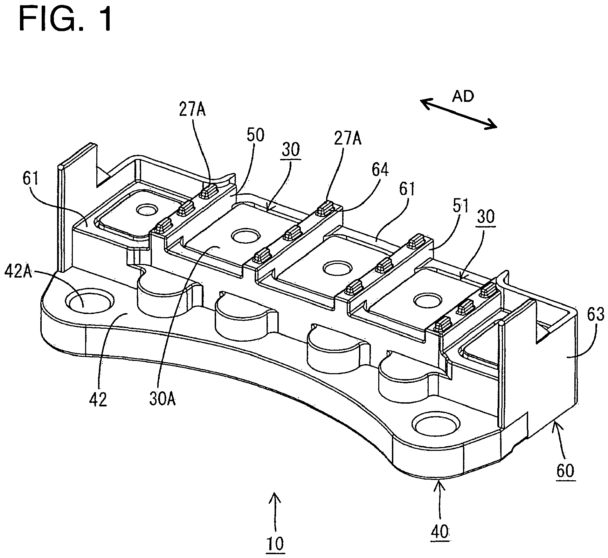

One particular embodiment of the present invention is described with reference to FIGS. 1 to 16.

In this embodiment is illustrated a terminal block 10 which is to be mounted on a motor case to be installed in a vehicle such as an electric vehicle or a hybrid vehicle and electrically connects one or more busbars such as a three-pole busbar (as an example of a "conductor") provided in a motor such as a three-phase alternating current motor and one or more busbars such as a three-pole busbar (as an example of a "conductor") provided in an inverter.

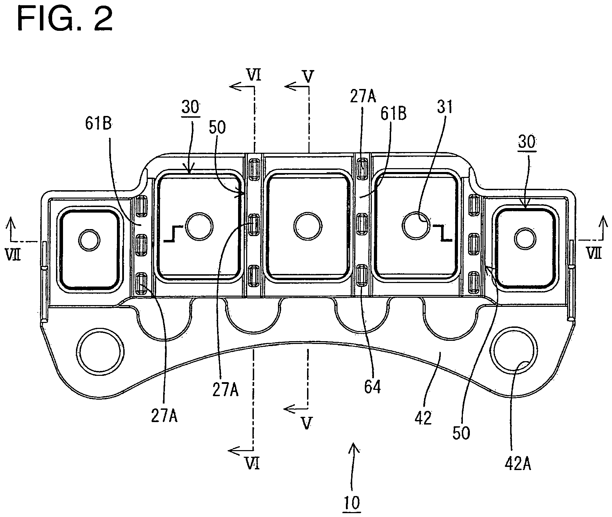

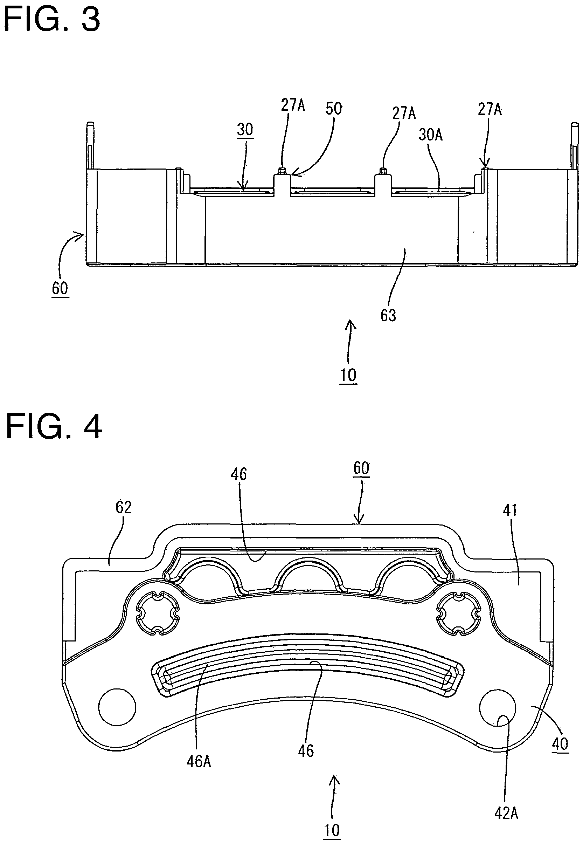

The terminal block 10 includes one or more nuts 30 on which the above one or more busbars are to be placed, a heat sink 40 arranged on one side (particularly at a lower side) of the nut(s) 30 substantially opposite to another side (particularly an upper side) where the one or more busbars are to be placed, an insulation plate 20 made e.g. of synthetic resin and sandwiched between the nut(s) 30 and the heat sink 40 from opposite (upper and lower) sides, and a molded resin portion (corresponding to a particular "secondary molding portion") 60 made e.g. of synthetic resin and at least partly covering the three members 30, 20 and 40. Further, the terminal block 10 of this embodiment transfers heat transferred to the nut(s) 30 from the busbar(s) to the heat sink 40 via the insulation plate 20 and radiates (or transfers) the heat toward (or to) the motor case from the heat sink 40. Note that, in the following description, a vertical direction is based on FIG. 3 and a lateral direction is based on FIG. 2.

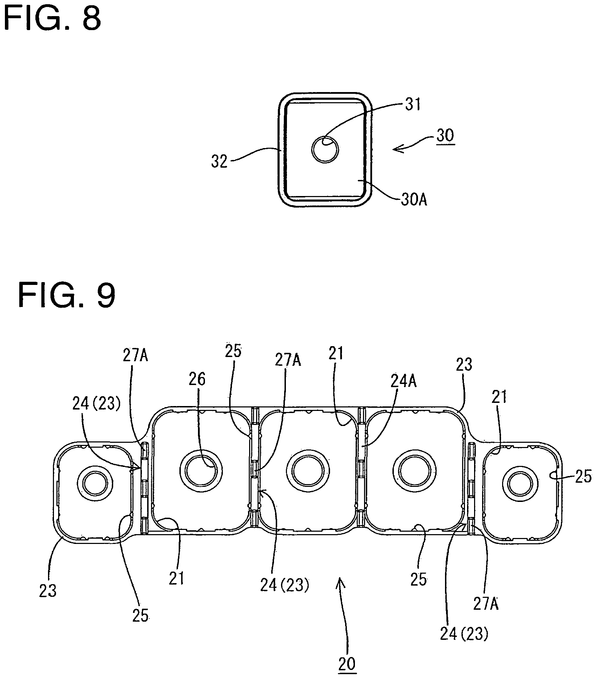

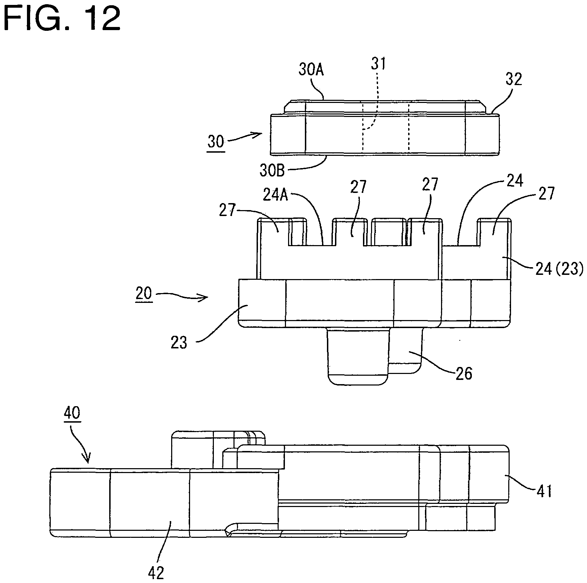

The (particularly each) nut 30 is in the form of a thermally conductive or metal block and particularly has a substantially rectangular plan view e.g. with four rounded corners as shown in FIGS. 8 and 12. A bolt fastening hole 31 penetrating in the vertical direction is formed in an intermediate part (particularly substantially in a central part) of the nut 30. An unillustrated bolt is to be threadably engaged with the bolt fastening hole 31 to electrically connect the busbar(s) after one or more, particularly a plurality of unillustrated busbars are placed on an upper fastening surface 30A of the nut 30.

A stepped portion 32 at least partly is formed on an outer peripheral part of an upper end portion of the nut 30. This stepped portion 32 is formed to be slightly lower than the upper fastening surface 30A of the nut 30 as shown in FIG. 12. Further, the stepped portion 32 particularly is provided over the entire circumference of the outer peripheral portion of the nut 30 and/or formed to be substantially parallel to the upper fastening surface 30A and/or a lower fastening surface 30B of the nut 30. Furthermore, the upper fastening surface 30A, the lower fastening surface 30B and the stepped portion 32 of the nut 30 particularly are substantially formed to be even and flat.

The insulation plate 20 is made e.g. of synthetic resin and shaped to be laterally long as shown in FIG. 9. This insulation plate 20 functions to transfer heat transferred to the nut(s) 30 from the busbar(s) to the heat sink 40 located therebelow. Further, the synthetic resin used for the insulation plate 20 has a content of glass and talc of more than about 50% (particularly of about 66 %) and/or has higher thermal conductivity and is less likely to be warped after molding as compared with synthetic resin particularly having a content of glass and talc of about 33 %. This makes a bottom plate 22 of the insulation plate 20 more easily held in close contact with the nuts 30.

As shown in FIG. 9, the insulation plate 20 is provided with one or more, particularly a plurality of (five in this embodiment) nut accommodating recesses 21 which are substantially arranged side by side in the lateral direction and into which the nuts 30 can be at least partly accommodated.

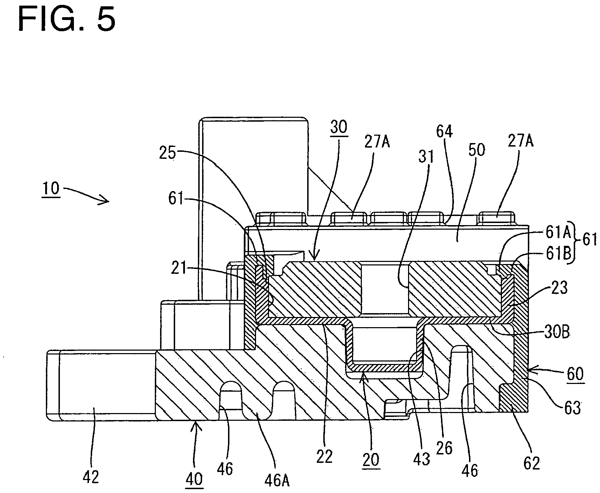

As shown in FIG. 5, each nut accommodating recess 21 includes the bottom plate 22 with which the lower fastening surface 30B of the nut 30 can be held in close contact, and a surrounding wall 23 standing upward or projecting from the bottom plate 22 to surround the side surface of the nut 30 over at least part of its circumference, particularly the substantially entire circumference. Further, the nut accommodating recess 21 particularly has an open upper end, and this upper end opening particularly has a substantially rectangular shape e.g. with four rounded corners as shown in FIG. 9. The respective nut accommodating recesses 21 are so formed substantially side by side that the longer sides thereof abut on each other.

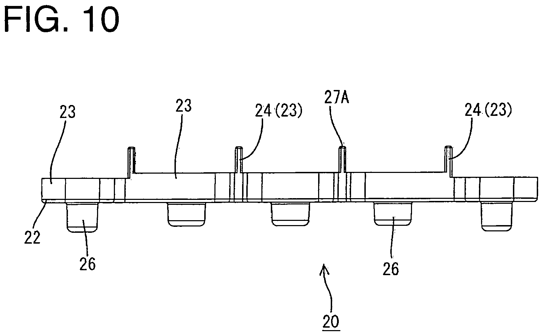

As shown in FIG. 10, the bottom plate 22 particularly is a single plate common to all the nut accommodating recesses 21. Further, the upper and lower surfaces of the bottom plate 22 particularly are formed to be substantially flat. By this, as shown in FIG. 5, the upper surface of the bottom plate 22 and the lower fastening surface 30B of the nut 30 can be held in close contact with each other without any clearance in the nut accommodating recess 211.

As shown in FIG. 9, each surrounding wall 23 particularly has a substantially rectangular inner peripheral shape in conformity with the outer peripheral shape of the nut 30. The inner peripheral shape of the surrounding wall 23 is set to be slightly larger than the outer peripheral shape of the nut 30. With the nut 30 at least partly accommodated in the nut accommodating recess 21, a tiny clearance is formed between the inner peripheral surface of the surrounding wall 23 and the side surface of the nut 30. Further, a part of the surrounding wall 23 located between adjacent nut accommodating recesses 21 is common to the both nut accommodating recesses 21 and serves as an insulation wall 24 at least partly partitioning between the both nuts 30 at least partly accommodated in the both or adjacent nut accommodating recesses 21.

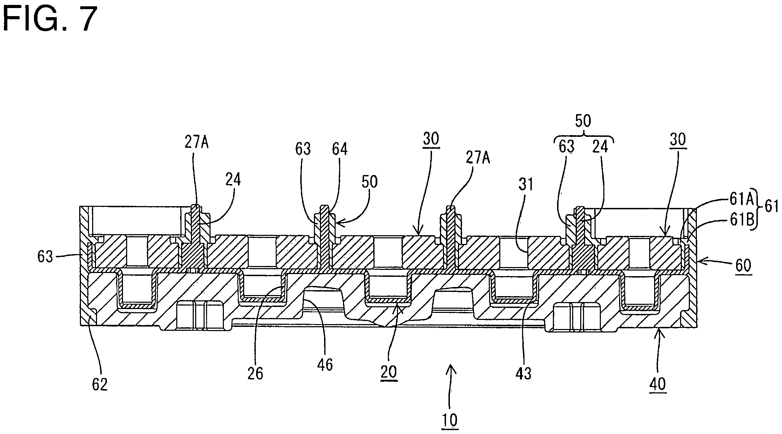

The insulation walls 24 are arranged to extend in a direction intersecting or at an angle different from 0° or 180°, preferably substantially perpendicular to an arrangement direction AD of the adjacent nuts 30 when the nuts 30 are at least partly accommodated into the nut accommodating recesses 21. Further, the height of the insulation walls 24 is set to be more than 1.5 times (particularly about twice or more) the height of the nuts 30 as shown in FIG. 7. The height of the insulation walls 24 is so set that the upper surfaces of the insulation walls 24 are higher than the upper surfaces of the uppermost busbar(s) when the nut(s) 30 is/are at least partly accommodated into the nut accommodating recesses 21 and the one or more, particularly the plurality of busbars are placed on the upper fastening surface(s) 30A of the nut(s) 30. Further, a creepage distance capable of providing electrical insulation between the adjacent nut accommodating recesses 21 particularly is ensured only by the insulation walls 24.

As shown in FIG. 9, one or more, particularly a plurality of positioning ribs 25 projecting inwardly of the nut accommodating recess 21 are provided on the inner peripheral surface of the (particularly each) surrounding wall 23. As shown in FIG. 5, these positioning ribs 25 particularly vertically extend straight. The projecting ends of the positioning ribs 25 particularly can be held in contact with the side surface of the nut 30 accommodated in the nut accommodating recess 21. Further, the height of the positioning ribs 25 particularly is set to be substantially equal to that of the nuts 30 as shown in FIG. 5. Accordingly, when the nut 30 is at least partly accommodated into the nut accommodating recess 21, the (particularly each) positioning rib 25 is held in contact with the side surface of the nut 30 (particularly over the overlapping distance of the positioning rib 25 and the nut 30, particularly substantially over the entire height). In this way, the nut 30 is precisely positioned by the one or more, particularly the plurality of positioning ribs 25 while being at least partly accommodated in the nut accommodating recess 21.

Further, a bolt escaping recess 26 is formed in an intermediate part (particularly in substantially in a central part) of the bottom plate 22 surrounded by the surrounding wall 23. As shown in FIGS. 5 and 10, this bolt escaping recess 26 particularly substantially has a cylindrical shape which makes a circular opening in the upper surface of the bottom plate 22 and/or projects downward.

As shown in FIG. 5, this bolt escaping recess 26 substantially is arranged coaxially with the bolt fastening hole 31 of the nut 30. Even if the bolt is threadably engaged with the bolt fastening hole 31 to penetrate through the bolt fastening hole 31, the bolt does not interfere with the bottom plate 22 of the insulation plate 20 and breakage of the insulation plate 20 by the bolt can be prevented.

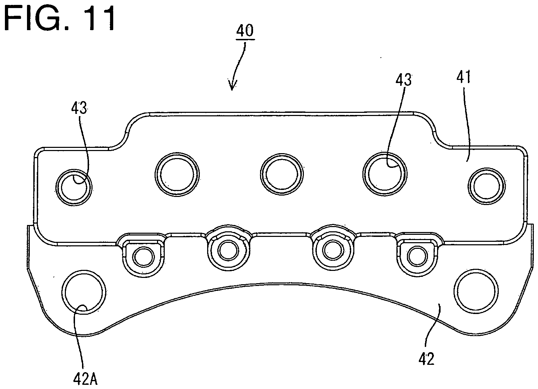

The heat sink 40 is made of aluminum die-cast (or of a material having a high thermal capacity and/or thermal heat conductivity) and shaped to be laterally long as shown in FIG. 11. The heat sink 40 includes a sink body 41 on which the insulation plate 20 is to be placed, and a fixing portion 42 integrally or unitarily formed to a lateral edge of the sink body 41.

The insulation plate 20 is to be placed on the upper surface of the sink body 41. Further, the upper surface of the sink body 41 particularly is flat and/or polished to be free from unevenness. This contributes to close contact of the lower surface of the bottom plate 22 of the insulation plate 20 and the upper surface of the sink body 41 with each other as shown in FIG. 5.

As shown in FIG. 11, the sink body 41 is formed with one or more (e.g. five) accommodating recesses 43 particularly arranged substantially at regular intervals or pitches in the lateral direction. As shown in FIG. 5, the accommodating recesses 43 particularly are bottomed recesses formed to make (particularly substantially circular) openings in the upper surface of the sink body 41 and extending downward from the upper surface of the sink body 41. Each accommodating recess 43 particularly has a hole diameter substantially equal to the outer diameter of the bolt escaping recess 26 of the insulation plate 20 and/or the bolt escaping recess 26 at least partly is fittable into the accommodating recess 43. This enables the insulation plate 20 and the heat sink 40 to be assembled while being positioned with respect to each other by fitting the respective bolt escaping recesses 26 into the respective accommodating recesses 43.

The fixing portion 42 particularly is shaped to be long in the lateral direction. Bolt insertion holes 42A penetrating in the vertical direction are provided on opposite lateral sides of the fixing portion 42. Unillustrated fixing bolts are to be inserted into respective ones of these one or more bolt insertion holes 42A after the terminal block 10 is placed on the motor case, and the terminal block 10 is to be fixed or mounted to the motor case by tightening the fixing bolt(s) to the motor case.

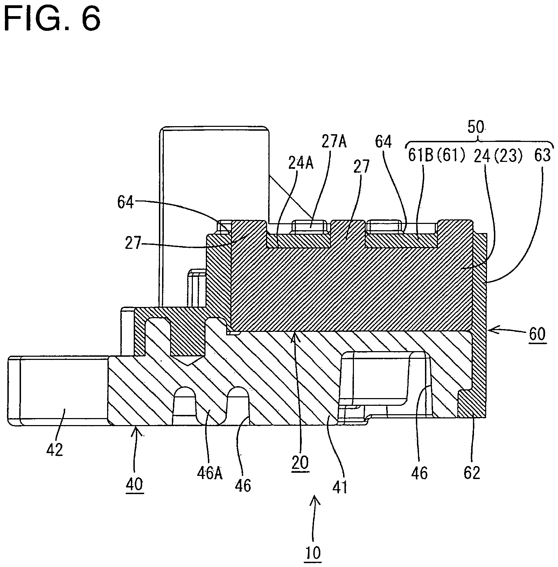

Further, as shown in FIGS. 5 and 6, one or more recesses 46 are formed in the lower surfaces of the sink body 41 and the fixing portion 42. At least one fin 46A for heat radiation is formed in the recess 46 of the fixing portion 42 out of these recesses 46, and coolant (such as cooling water) comes or can come into contact with this fin 46A. This heat radiation fin 46A functions to increase a contact area with the cooling water in the recess 46, efficiently cools the heat sink 40 and improves heat radiation from the heat sink 40.

As shown in FIG. 5, the molded resin portion 60 particularly is made of secondary molding resin particularly shaped to at least partly cover the outsides of the respective members 30, 20 and 40 with the nuts 30, the insulation plate 20 and the heat sink 40 assembled with each other. Further, the molded resin portion 60 includes an upper covering portion 61 to be held in close contact with (particularly the stepped portion(s) 32 of) the nut(s) 30 and/or upper end portion(s) of the surrounding wall(s) 23 of the insulation plate 20, a lower covering portion 62 to be held in close contact with a lower outer peripheral edge portion of the sink body 41 of the heat sink 40, and/or a side wall portion 63 to be held in close contact with the outer side surface(s) of the insulation plate 20 and/or the sink body 41 of the heat sink 40. Further, as shown in FIGS. 5 and 6, the side wall portion 63 particularly is integrally or unitarily formed to the upper and lower covering portions 61, 62 to connect the upper and lower covering portions 61, 62.

As shown in FIG. 5, the upper covering portion 61 is composed of or comprises one or more nut covering portions 61 A at least partly covering the outer peripheral edge portion(s) of the stepped portion(s) 32 of the respective nut(s) 30 (particularly substantially over the entire circumferences) and/or one or more surrounding wall covering portions 61 B at least partly covering the upper surface(s) of the surrounding wall(s) 23. The (respective) nut covering portion(s) 61A and the (respective) surrounding wall covering portion(s) 61 B are integrally or unitarily formed, whereby the upper covering portion 61 particularly covers all the nuts 30 and surrounding walls 23 together. This prevents the nuts 30 from being separated outwardly or upwardly from the outer or upper surface of the insulation plate 20 by being pulled by the bolts in fastening the bolts to the nuts 30, thereby preventing a reduction in heat transfer performance of the terminal block 10.

Further, the upper covering portion 61 particularly is so formed as to fill up the clearances between the inner peripheral surfaces of the surrounding walls 23 of the nut accommodating recesses 21 and the side surfaces of the nuts 30. Since particularly not only the outer peripheral edge portions of the stepped portions 32 of the nuts 30 are held in close contact with the nut covering portions 61A, but also the outer peripheral surfaces of the nuts 30 are held in close contact with the molded resin portion 60 over the entire circumferences, upward movements of the nuts 30 are further prevented.

As shown in FIGS. 4 and 5, the lower covering portion 62 is so formed as to at least partly cover the lower outer peripheral edge portion of the sink body 41 of the heat sink 40 form below.

As shown in FIGS. 5 and 6, the side wall portion 63 particularly is so formed as to entirely cover the inner and outer side surfaces of the surrounding walls 23 and the side surface of the sink body 41 of the heat sink 40 between the upper and lower covering portions 61, 62.

The surrounding wall covering portion(s) 61 B at least partly covering the upper end surface(s) of the insulation wall(s) 24 and the side wall portion 63 at least partly covering the side surface(s) of the insulation wall(s) 24 (particularly substantially over the entire circumferences) are integrally or unitarily formed to the insulation wall(s) 24 of the insulation plate 20 and/or serve as one or more partition walls 50 at least partly partitioning between the respective nuts 30 (particularly together with the insulation walls 24). Further, the side wall portion 63 at least partly covering the side surfaces of the insulation wall(s) 24 particularly substantially evenly cover the insulation walls 24 over the entire circumferences as shown in FIGS. 6 and 7. That is, each partition wall 50 is shaped by covering the insulation wall 24 made of primary molding resin by the surrounding wall covering portion 61 B and the side wall portion 63 made of secondary molding resin, i.e. shaped in two separate processes or molding steps. This can suppress production of voids in the partition wall 50 as compared with the case where the partition wall 50 is formed by one molding. Further, since the insulation walls 24 particularly are substantially evenly surrounded by the side wall portion 63 over the substantially entire circumferences, the peel-off at interfaces between the insulation walls 24 and the side wall portion 63 can be suppressed as compared with the case where the insulation walls 24 are inclined in the partition walls 50 and the thickness of the side wall portion 63 is partly small.

As shown in FIGS. 1 and 5, one or more exposed portions 27A provided on the insulation walls 24 are slightly exposed on the upper or distal end surfaces of the surrounding wall covering portion(s) 61 B at the partition wall(s) 50. These one or more exposed portions 27A are parts of projecting portions 27 projecting upward or outward from upper or distal end surfaces 24A of the insulation walls 24 and exposed upward or outward from the upper or distal end surfaces of the surrounding wall covering portions 61 B.

As shown in FIG. 9, particularly three exposed portions 27A are formed side by side in a length direction of each insulation wall 24 and/or arranged at opposite end parts of the insulation wall 24 in the length direction and a substantially central part of the insulation wall 24 in the length direction. Further, the exposed portions 27A particularly are upper end parts of the projecting portion 27 and a lower part of the projecting portion 27 are covered by the surrounding wall covering portion 61 B. That is, a plurality of (e.g. three) exposed portions 27A particularly is/are formed on the upper end surface of the surrounding wall covering portion 61 B without forming a long straight part. This can suppress the occurrence of resin warping and resin peel-off at interfaces between the insulation wall 24 and the surrounding wall covering portion 61 B and the side wall portion 63 as compared with an exposed portion having a long straight line.

As shown in FIG. 7, the exposed portions 27A are located in lateral intermediate parts (particularly substantially in lateral central parts) on the upper or distal end surfaces of the surrounding wall covering portions 61 B. This means that the insulation walls 24 are arranged at proper positions without being inclined in the partition walls 50 and the opposite left and right surfaces of the insulation walls 24 are covered by the side wall portion 63 with a substantially even thickness as described above. That is, by confirming the exposed portions 27A (particularly located substantially in the lateral central parts) on the upper end surfaces of the surrounding wall covering portions 61 B, it can be visually guaranteed that the insulation walls 24 are arranged at the proper positions without being inclined in the partition walls 50.

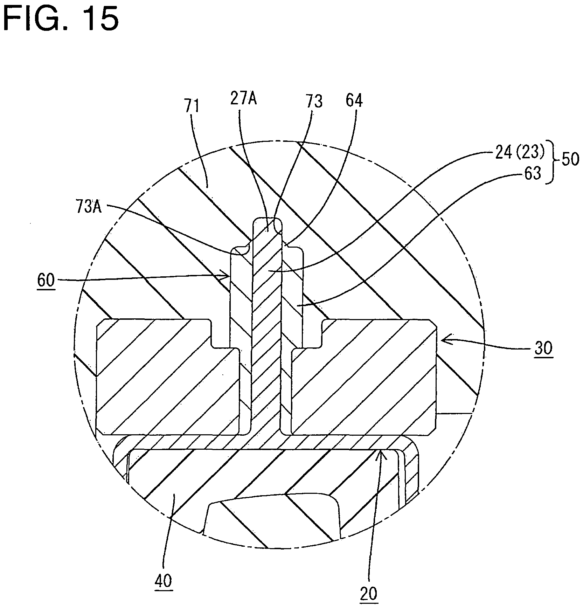

As shown in FIG. 15, an inclined or tapered portion 64 obliquely extending like a fillet from the upper or distal end surface of the surrounding wall covering portion 61 B toward the side surface of the exposed portion 27A is formed at a base end portion of the exposed portion 27A exposed from the upper or distal end surface of the surrounding wall covering portion 61 B. This inclined portion 64 particularly is formed to be thin and flexible, and/or formed over the entire circumference between the base end portion of the exposed portion 27A and the upper end surface of the surrounding wall covering portion 61 B as shown in FIGS. 6 and 7. In this way, the inclined portion 64 particularly follows deformation of the exposed portion 27A to be held in close contact with the base end portion of the exposed portion 27A when an external force acts on the exposed portion 27A. Accordingly, the occurrence of resin peel-off at the interface between the base end portion of the exposed portion 27A and the surrounding wall covering portion 61 B can be suppressed.

The terminal block of this embodiment is structured as described above. Next, a method for producing the terminal block 10 is described.

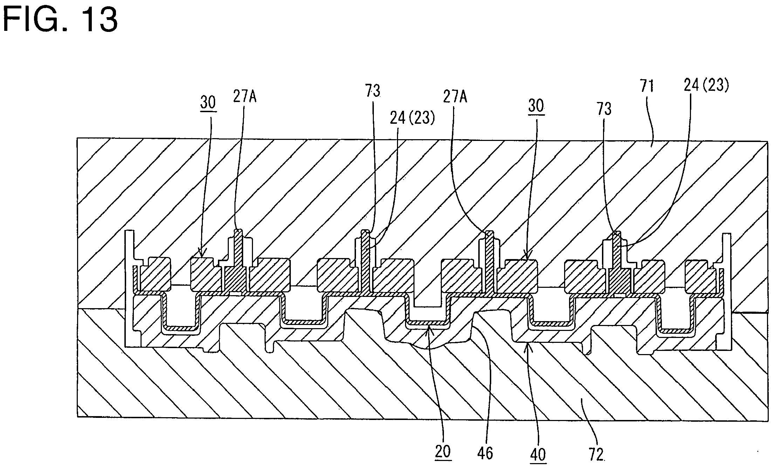

First, the one or more nuts 30 are at least partly accommodated into the one or more respective nut accommodating recesses 21 of the insulation plate 20 and the one or more bolt escaping recesses 26 of the nut accommodating recess(es) 21 at least partly are fitted into the one or more respective accommodating recesses 43 of the heat sink 40, whereby the nut(s) 30, the insulation plate 20 and the heat sink 40 are assembled while being positioned with respect to each other, and set in a lower mold 72. Thereafter, a (particularly substantially vertically) movable upper mold 71 is closed with the lower mold 72 to clamp a mold as shown in FIG. 13.

The upper mold 71 includes one or more supporting portions 73 for supporting the upper end parts of the projecting portions 27 of the insulation plate 20, which are at least partly fitted thereinto, from above. These supporting portions 73 particularly are substantially rectangular recesses formed in the inner surface of the upper mold 71 and/or extending upward. The upper or distal end parts of the projecting portions 27 are held in close contact with the inner surfaces of the supporting portions 73 when the upper and lower molds 71, 72 are clamped. As shown in FIG. 15, an inclined surface 73A inclined from an inner side toward an outer side particularly is formed over the entire circumference in an opening of each supporting portion 73. In this way, when the upper and lower molds 71, 72 are clamped, the leading ends of the projecting portions 27 are guided into the supporting portions 73 by the inclined surfaces 73A and the projecting portions 27 can be so supported by the supporting portions 73 that the insulation walls 24 are not laterally inclined.

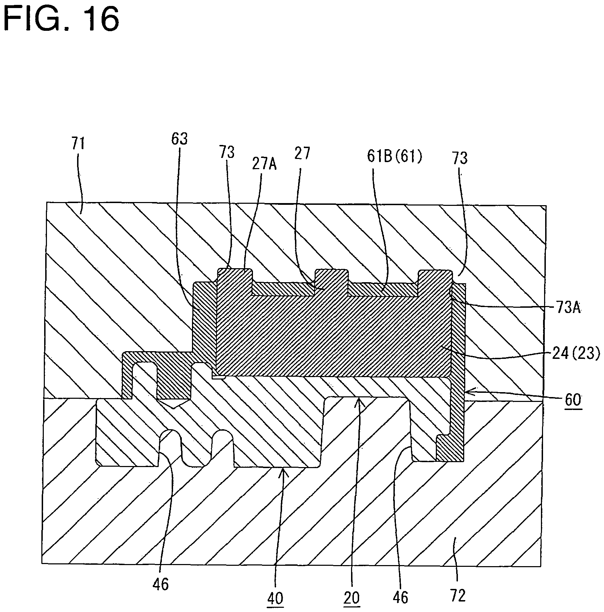

On the other hand, as shown in FIG. 16, the lower mold 72 is at least partly fitted into the recess 46 formed in the lower surface of the heat sink 40 to support the heat sink 40 in a positioned state. In this way, the three members 30, 20 and 40 particularly can be held in the upper and lower molds 71, 72 while being positioned, and can be held in close contact with each other.

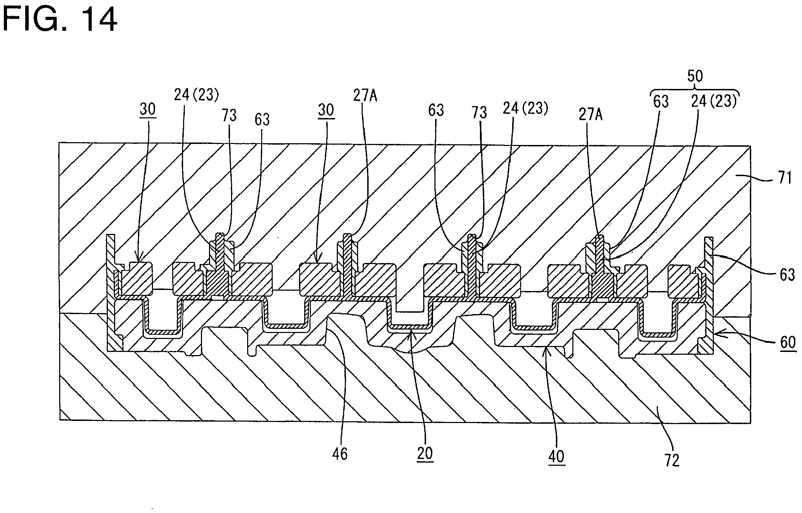

Subsequently, in the above state, secondary molding resin is injected into the upper and lower molds 71, 72 to at least partly shape the molded resin portion 60 as shown in FIG. 14. At this time, since the upper end parts of the projecting portions 27 are supported by the supporting portions 73, inclination of the insulation walls 24 by an injection pressure of the secondary molding resin is prevented and the insulation walls 24 can be arranged at the proper positions in the partition walls 50. This can suppress the surrounding wall covering portions 61 B and the side wall portion 63 covering the insulation walls 24 from becoming thinner and peeling off.

Since the side surfaces of the nuts 30 particularly can be held in contact with only the positioning ribs 25 on the inner peripheral surfaces of the surrounding walls 23 of the insulation plate 20, clearances are formed between the inner surfaces of the surrounding walls 23 and the side surfaces of the nuts 30 and the secondary molding resin can flow into these clearances.

Finally, by opening the upper and lower molds 71, 72 relatively to each other (e.g. upward and downward) when the secondary molding resin substantially is cured, the terminal block 10 of this embodiment is completed. In this state, the exposed portions 27A are exposed on the upper surfaces of the surrounding wall covering portions 61 B and it can be confirmed that the insulation walls 24 are not inclined if the exposed portions 27A are located in substantially lateral central parts of the partition walls 50.

As described above, since the insulation walls 24 (upper end parts of the projecting portions 27) particularly are supported by the supporting portions 73 according to the terminal block 10 of this embodiment, inclination of the insulation walls 24 by the injection pressure of the secondary molding resin can be prevented. In this way, the occurrence of the peel-off of the secondary molding resin around the exposed portions 27A particularly can be suppressed as compared with the case where the partition walls 50 are shaped with the insulation walls 24 inclined in the partition walls 50.

Further, since the exposed portions 27A particularly are exposed in the substantially lateral central parts on the upper end surfaces of the surrounding wall covering portions 61 B, the positions of the insulation walls 24 in the partition walls 50 can be easily confirmed and it can be guaranteed that the insulation walls 24 are not inclined in the partition walls 50.

Further, since the surrounding wall covering portion 61 B particularly is formed to cover the upper end surface 24A of the insulation wall 24 and at least partly surround the three exposed portions 27A (particularly substantially over the entire circumferences) as shown in FIG. 16, the exposed portions 27A do not form a long straight part. This can suppress the occurrence of warping and peel-off of the secondary molding resin in parts around the exposed portions 27A.

Furthermore, since the flexible inclined portions 64 particularly are formed between the exposed portions 27A and the surrounding wall covering portion 61 B by the inclined surfaces 73A of the supporting portions 73, the inclined portions 64 particularly can follow the exposed portions 27A and/or the peel-off of the secondary molding resin particularly can be suppressed even if an external force acts on the exposed portions 27A to deform the insulation wall 24.

Accordingly, to suppress the peel-off of secondary molding resin by preventing inclination of an insulation wall in a partition wall and make it easy confirmable that the insulation wall is not inclined in the partition wall, a terminal block 10 fastens one or more conductors by (particularly placing the conductors one above another and) fastening one or more bolts and includes one or more, particularly a plurality of nuts 30 on which the one or more conductors are to be placed and one or more partition walls 50 adjacent to the nut(s) 30, particularly at least partly partitioning between adjacent nuts 30. The (particularly each) partition wall 50 includes an insulation wall 24 provided in an insulation plate 20 arranged below the nut(s) 30 and a molded resin portion 60 at least partly covering the upper surface of the insulation wall 24 and/or the side surface of the insulation wall 24. One or more exposed portions 27A, which are exposed upper or distal end parts of a projecting portion 27 provided on the insulation wall 24, are provided on the upper end surface of the molded resin portion 60.

### <Other Embodiments>

The present invention is not limited to the above described and illustrated embodiment. For example, the following embodiments are also included in the technical scope of the present invention.
(1) Although heat can be radiated from below by arranging the heat sink 40 below the insulation plate 20 in this embodiment, the present invention is not limited to such a mode and can also be applied, for example, when the lower side of the insulation plate 20 is covered by the resin molded portion 60 which is made of synthetic resin.
(2) Although three exposed portions 27A are arranged in this embodiment, the present invention is not limited to such a mode and one, two or four or more exposed portions may be, for example, arranged.
(3) Although the inclined portion 64 is provided over the entire circumference of the base end portion of the exposed portion 27A in this embodiment, the present invention is not limited to such a mode and inclined portions may be provided only at a lateral side or at the substantially opposite lateral sides of the base end portion of the exposed portion 27A.

### LIST OF REFERENCE NUMERALS

10: terminal block
24: insulation wall
27: projecting portion
27A: exposed portion
30: nut
50: partition wall
60: molded resin portion (secondary molding portion)
64: inclined portion

## Claims

1. A terminal block (10) for fastening conductors by placing the conductors one above another and fastening bolts, comprising a plurality of nuts (30) on which the conductors are to be placed and a partition wall (50) partitioning between the nuts (30) adjacent to each other, wherein the partition wall (50) extends in a direction crossing an arrangement direction (AD) of the nuts (30) and includes
an insulation wall (24) made of primary molding resin, located at least in a range in a vertical direction from the lower surfaces of the nuts (30) to the upper surfaces of the bolts to be fastened to the nuts (30) and insulating between the adjacent nuts (30), and
a secondary molding portion (60) made of secondary molding resin, filling up clearances between the insulation wall (24) and the nuts (30) and at least partly covering the side surface of the insulation wall (24).

2. A terminal block according to claim 1, wherein at least one exposed portion (27A), which is an exposed part of a projecting portion (27) projecting upward from the upper end of the insulation wall (24), is provided on the upper surface of the secondary molding portion (60).

3. A terminal block according to any one of the preceding claims, wherein the secondary molding portion (60) covers the side surface of the insulation wall (24) over the substantially entire circumference.

4. A terminal block according to claim 2 or 3, wherein a plurality of exposed portions (27A) are arranged in the direction crossing the arrangement direction (AD) of the nuts (30) on the upper surface of the secondary molding portion (60).

5. A terminal block according to any one of the preceding claims, wherein a inclined portion (64) at least partly covering a base end portion of the exposed portion (27A) is formed on the upper surface of the secondary molding portion (60).

6. A terminal block according to claim 5, wherein the inclined portion (64) covers a base end portion of the exposed portion (27A) over the entire circumference.

7. A terminal block according to claim 5 or 6, wherein the inclined portion (64) is configured such as to follow deformation of the exposed portion (27A) in order to be held in close contact with the base end portion of the exposed portion (27A) when an external force acts on the exposed portion (27A).

8. A terminal block according to any one of the preceding claims, further comprising a heat sink (40) to be arranged on one side of the nut(s) (30) substantially opposite to another side where the conductor(s) is/are to be placed and an insulation plate (20) to be sandwiched between the nut(s) (30) and the heat sink (40) from opposite sides.

9. A terminal block according to claim 8, wherein the secondary molding portion (60) at least partly covers the nut(s) (30), the insulation plate (20) and the heat sink (40).

10. A terminal block according to claim 8 or 9, wherein the secondary molding portion (60) includes:
an upper covering portion (61) to be held in close contact with the nut(s) (30) and/or upper end portion(s) of surrounding wall(s) (23) of the insulation plate (20),
a lower covering portion (62) to be held in close contact with a sink body (41) of the heat sink (40), and/or
a side wall portion (63) to be held in close contact with the outer side surface(s) of the insulation plate (20) and/or the sink body (41) of the heat sink (40).

11. A terminal block according to claim 10, wherein the upper covering portion (61) is so formed as to fill up the clearances between the inner peripheral surfaces of the surrounding wall (23) of the nut accommodating recess (21) and the side surface of the respective nut (30).

12. A terminal block according to claim 10 or 11, wherein the upper covering portion (61) comprises one or more surrounding wall covering portions (61 B) at least partly covering the upper surface(s) of the surrounding wall(s) (23).

13. A terminal block according to any one of the preceding claims, wherein nut accommodating recesses (21) are provided which are substantially arranged side by side and into which the nuts (30) can be at least partly accommodated, wherein a creepage distance capable of providing electrical insulation between the adjacent nut accommodating recesses (21) particularly is ensured only by the insulation wall(s) (24).

14. A method of molding a terminal block (10) for fastening conductors by placing the conductors one above another and fastening bolts, the method comprising the following steps:
assembling one or more nuts (30), an insulation plate (20) having an insulation plate (24) made by primary molding resin and a heat sink (40) with each other and setting it in a first mold (72),
relatively displacing the first mold (72) with respect to a second mold (71) so as to close the first and second molds (72, 71), wherein the first mold (72) supports the heat sink (40) in a positioned state and wherein the second mold (71) includes one or more supporting portions (73) for supporting projecting portions (27) of the insulation plate (20),
injecting secondary molding resin into the first and second molds (72, 71) to at least partly shape a secondary molding portion (60) filling up clearances between the insulation wall (24) and the nuts (30) and at least partly covering the side surface of the insulation wall (24), and
opening the first and second molds (72, 71) relatively to each other when the secondary molding resin substantially is cured.

15. A molding method according to claim 14, further comprising forming at least one exposed portion (27A), which is an exposed part of a projecting portion (27) projecting upward from the upper end of the insulation wall (24), on the upper surface of the secondary molding portion (60).
